# EUROPEAN PATENT APPLICATION

(11) **EP 2 312 717 A2**
(43) Date of publication of application: **20.04.2011**
(21) Application number: 10187865.0
(22) Date of filing: 18.10.2010
(51) Int. Cl.: H02G 15/06, H02G 15/072

(54) **Overhead line engagement bushing**

(30) Priority: 19.10.2009 JP 2009240638
(71) Applicant: Kabushiki Kaisha Toshiba, Minato-ku Tokyo (JP)
(72) Inventor: Miyauchi, Yasuhisa, Tokyo (JP); Ito, Takashi, Tokyo (JP); Sakaguchi, Osamu, Tokyo (JP)
(74) Representative: HOFFMANN EITLE

(57) **Abstract**

According to one embodiment, an overhead line engagement bushing includes a polymer bushing (10) for reinforcing the external insulation, and a cable terminal (11) accommodated in the polymer bushing (10): the polymer bushing (10) includes a connection terminal (17) connected with the overhead line, and the cable terminal (11) includes a cable body (20), an electrical field buffering member (22) that controls the creepage electrical field of the cable body (20), a pressure terminal (21) that is provided at one end of the cable body (20) and that is connected with the connection terminal (17), and a stress cone (23) provided at the other end of the cable body (20) and connected with a molded electrical device (6).

## Description

### FIELD

Embodiments described herein relate generally to an overhead line engagement bushing for transferring power from an overhead line (or overhead power line) to a solid insulation switchgear.

### BACKGROUND

Conventionally, as overhead line engagement bushings used in solid insulation switchgears and the like, bushings have been employed provided with a polymer coating such as silicone rubber on the surface of an epoxy bushing insulator. In this way, compared with a porcelain bushing (or porcelain tube), weight reduction, slimming, and miniaturization can be achieved. An example is described in Laid-open Japanese Patent Application No. Tokkai 2009-5514 (page 4, FIG. 1) (hereinafter referred to as Patent Reference 1).

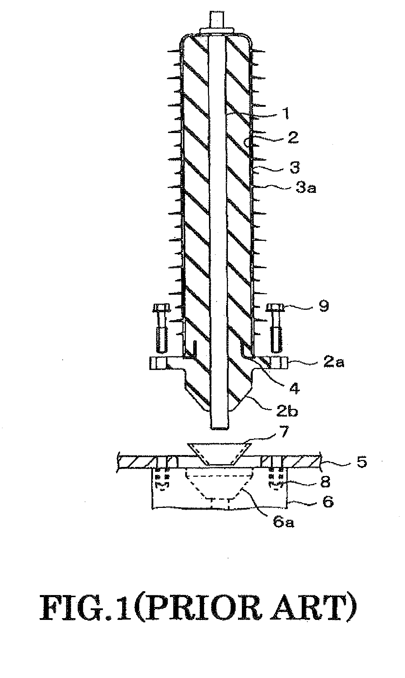

In a bushing of this type, as shown in FIG. 1, an insulator 2 formed by molding epoxy resin around a core conductor 1 is provided. A radially projecting flange 2a is provided in an axially intermediate section of the insulator 2. External insulation reinforcement is effected by the provision of a polymer insulator 3, at the periphery on one side of the flange 2a, having a plurality of pleats 3a formed by molding silicone rubber. The periphery on the other side of the flange 2a is constituted by an interface insulating stress cone 2b. A shield electrode 4 for electrical field buffering is embedded in the interior of the insulator 2.

Furthermore, this bushing is interface-connected with a molded electrical device 6 fixed to the plate wall 5 of the solid insulation switchgear. A concave interface-connecting section 6a is provided in this molded electrical device 6 and is hermetically connected with the stress cone 2b of the bushing, by means of a flexible insulator 7. Also, metal anchors 8 are embedded in the periphery of the interface connecting section 6a, being secured by means of bolts 9 through the flange 2a. In this way, the overhead line engagement bushing can be fixed to a molded electrical device 6.

The conventional overhead line engagement bushing described above is subject to the following problems.

Although the stress cone 2b of the overhead line engagement bushing is hermetically connected with the interface connecting section 6a of the molded electrical device 6 and so can exhibit excellent insulation performance and conduction performance, since these items both comprise solid insulators, it is difficult to allow for dimensional errors in manufacture, making the assembly task difficult. For example, the insulator 2 may be tilted by differences in the planarity of the flange 2a and molded electrical device 6, or stress may be applied to the insulator 2 or molded electrical device 6 due to differences in coaxiality of the core conductor 1 and insulator 2. Tilting of the insulator 2 results in mismatching of the three phases and generation of stress on the insulator 2 may cause cracking.

An overhead line engagement bushing was therefore desired having flexibility of the connection with the molded electrical device 6, making possible latitude in regard to dimensional errors in manufacture, and so facilitating the assembly task. In particular, in solid insulation switchgears, a plurality of solid insulation electrical devices may be connected, so an overhead line engagement bushing was desired in which a flexible member could be interposed, to give a degree of freedom in assembly.

According to the aspect of the present technology, an object is to provide an overhead line engagement bushing that is connected and fixed to a solid insulation switchgear, having flexibility facilitating the assembly task.

In order to achieve the above object, an overhead line engagement bushing according to the present invention comprises a polymer bushing for reinforcing the external insulation, and a cable terminal accommodated in aforementioned polymer bushing: aforementioned polymer bushing comprises a connection terminal connected with the overhead line, and aforementioned cable terminal comprises a cable body, an electrical field buffering member that controls the creepage electrical field of aforementioned cable body, a pressure terminal that is provided at one end of aforementioned cable body and that is connected with aforementioned connection terminal, and a stress cone provided at the other end of aforementioned cable body and connected with a molded electrical device.

With the present invention, the main circuit is connected by accommodating a cable terminal having flexibility in a polymer bushing, so a degree of freedom can be brought to the connection with the molded electrical device, facilitating the assembly task.

### BRIEF DESCRIPTION OF THE DRAWINGS

FIG. 1 is a cross-sectional view showing the construction of a conventional overhead line engagement bushing;
FIG. 2 is a cross-sectional view showing the construction of an overhead line engagement bushing according to a first embodiment of the present invention; and
FIG. 3 is a cross-sectional view showing the construction of an overhead line engagement bushing according to a second embodiment of the present invention.

### DETATLED DESCRIPTION

According to the present invention, a cable terminal having flexibility is accommodated in a polymer bushing for reinforcing the external insulation, and is connected with a solid insulation molded electrical device. Embodiments of the present invention are described below with reference to the drawings.

### [First embodiment]

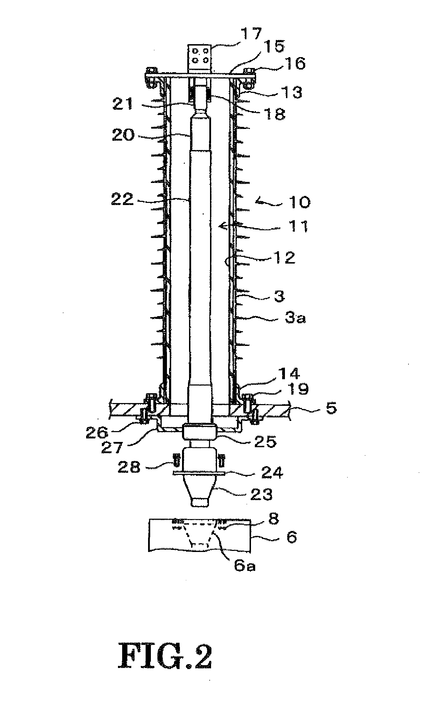

First of all, an overhead line engagement bushing according to a first embodiment of the present invention will be described with reference to FIG. 2. FIG. 2 is a cross-sectional view showing the construction of an overhead line engagement bushing according to the first embodiment of the present invention. In FIG. 2, structural portions that are the same as conventionally are given the same reference numerals.

As shown in FIG. 2, an overhead line engagement bushing comprises a polymer bushing 10 for reinforcing the external insulation and a cable terminal 11 connected with a main circuit and accommodated in the polymer bushing 10.

In the polymer bushing 10, there is provided a tubular insulating tube 12 made of insulating material such as FRP (Fiber Reinforced Plastics or Fiber Reinforced Polymer). At the periphery of the insulating tube 1.2, there is provided a polymer insulator 3 having a plurality of pleats 3a formed by molding silicone rubber, and annular flanges 13, 14 made of metal are provided at both end aperture faces.

A disc-shaped cover plate 15 is fixed by bolts 16 to one of the flanges 13 shown at the top in the Figure. A connection terminal 17, to which an overhead line, not shown, is connected on the outside is fixed to the cover plate 15 and a contact 18 connected with a cable terminal 11 is fixed thereto on the inside. Another flange 14, at the foot of the drawing, is fixed to the plate wall 5 of the solid insulation switchgear by means of bolts 19.

A cable body 20 is provided on the cable terminal 11 and a pressure terminal 21 that makes sliding contact with the contact 18 is mounted thereon at one end. An electrical buffering member 22 for controlling the creepage electrical field is hermetically fixed to the periphery of the cable body 20. A heat-shrinkage tube or self-welding tape or the like may be employed for the electrical field buffering member 22, but a heat-shrinkage tube is operationally preferable.

At the other end of the cable body 20 passing through the aperture of the plate wall 5, there are provided a convex stress cone 23 formed by molding insulating material such as EP (ethylene propylene) rubber and a protective metal element 24. A cable fixing member 25 for ground potential fixing and mechanical fixing is provided in a through-hole section of the plate wall 5. The cable fixing member 25 is fixed in the plate wall 5 by a fixing metal element 27 fixed by means of bolts 26.

The cable body 20 has flexibility, being constituted by for example a core conductor made of twisted wire, an electrical field buffering layer provided on the side of the conductor and on the side of ground, and an insulating layer made of insulating material such as polyethylene resin, although these are not shown. It should be noted that the electrical field buffering layer on the side of ground may be eliminated in a section starting at the end and extending up to a prescribed location.

The stress cone 23 is interface-connected with a concave interface connection section 6a provided on the molded electrical device 6, which is molded of epoxy resin. A protective metal element 27 is fixed by means of a plurality of embedded metal anchors 8 and bolts 28 at the periphery of the interface-connecting section 6a. Springs or the like that apply face pressure to the stress cone 23 are accommodated in the protective metal element 27. The coil conductor terminal of the cable body 20 is exposed at the center of the stress cone 23 and connected with the main circuit of the molded electrical device 6.

In this way, the cable terminal 11 has flexibility, so even if there is some discrepancy in terms of coaxiality or length with regard to the polymer bushing 10, reliable connection with the main circuit can be achieved without applying stress to any portion. Also regarding the connection of the stress cone 23 and the molded electrical device 6, as described above, no stress is applied to any portion and reliable connection can be achieved.

Also, since the pressing terminal 21 and the contact 18 are in sliding contact, expansion/contraction of the cable terminal 11 due to heating caused by ambient temperature change or passage of current can be accommodated, Furthermore, manufacturing errors such as in regard to planarity and coaxiality of the molded electrical device 6 can be accommodated, facilitating the molding operation.

It should be noted that a construction of excellent insulation performance and high reliability, unaffected by the external environment can be achieved by providing o-rings between the flanges 13, 14 and the cover plate 15 and plate wall 5, and adopting a watertight construction between the cable fixing member 25 and the cable body 20 and hermetically sealing the interior of the polymer bushing 10. Also, reliability can be further improved if a drying agent is accommodated within the polymer bushing 10 and/or insulating gas such as dry air or nitrogen gas is sealed therein.

With an overhead line engagement bushing according to the first embodiment described above, a cable terminal 11 having flexibility is accommodated in a polymer bushing 10 and connected with the main circuit, so a degree of freedom can be provided in respect of the connection with the molded electrical device 6, making it possible to improve ease of assembly.

### [Second embodiment]

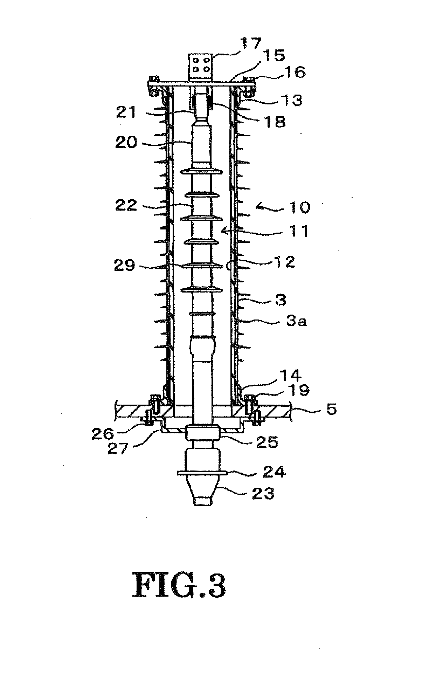

Next, an overhead line engagement bushing according to a second embodiment of the present invention will be described with reference to FIG. 3. FIG. 3 is a cross-sectional view showing the construction of an overhead line engagement bushing according to the second embodiment of the present invention. The difference of this second embodiment from the first embodiment is that pleats are provided on the cable body. In FIG. 3, structural portions that are the same as in the case of the first embodiment are given the same reference symbols and further detailed description thereof is dispensed with.

As shown in FIG. 3, a plurality of pleats 29 made of for example heat absorbing material are provided at the periphery of the cable body 20 and electrical field buffering member 22.

With the overhead line engagement bushing according to the second embodiment described above, apart from the beneficial effects obtained by the first embodiment, the creepage insulation endurance of the cable terminal 11 can be improved.

## Claims

1. An overhead line engagement bushing comprising:
(1) a polymer bushing for reinforcing an external insulation; and
(2) a cable terminal accommodated in said polymer bushing, wherein said polymer bushing comprises a connection terminal connected with said overhead line and
said cable terminal includes
(i) a cable body,
(ii) an electrical field buffering member that controls a creepage electrical field of said cable body,
(iii) a pressure terminal that is provided at one end of said cable body and that is connected with said connection terminal, and
(iv) a stress cone provided at the other end of said cable body and connected with a molded electrical device.

2. The overhead line engagement bushing according to claim 1,
wherein a plurality of pleats are provided at a periphery of said cable body.

3. The overhead line engagement bushing according to claim 1 or claim 2,
wherein an interior of said polymer bushing is hermetically sealed and a drying agent is provided therein.

4. The overhead line engagement bushing according to any of claims 1 to 3,
wherein said electrical field buffering member is a heat shrinkage tube.
